# DEMANDE DE BREVET EUROPEEN

(11) **EP 1 426 234 A1**
(43) Date de publication de la demande: **09.06.2004**
(21) Numéro de dépôt: 03362023.8
(22) Date de dépôt: 05.12.2003
(51) Int. Cl.: B60P 3/10

(54) **Dispositif de support et de réglage d'une traverse de remorque, notamment une remorque à bateaux et remorque équipée**

(30) Priorité: 06.12.2002 FR 0215413
(71) Demandeur: R.S.A., 33650 Saint Medard d'Eyrans (FR)
(72) Inventeur: Ruaud, Serge, 33650 Saint Medard d'Eyrans (FR)
(74) Mandataire: Fantin, Laurent

(57) **Abrégé**

L'objet de l'invention est un dispositif de réglage d'une traverse (12) d'une remorque à bateaux comprenant des longerons (10) et des traverses fixes, caractérisé en ce qu'il comprend des moyens (14) de fixation de ladite traverse (12), libres en rotation et réglables en hauteur par rapport aux longerons qui les supportent.
L'invention couvre aussi la remorque équipée de ce dispositif sur sa traverse (12) arrière.

## Description

La présente invention concerne un dispositif de réglage d'une traverse d'une remorque à bateaux.

L'invention couvre aussi la remorque équipée de ce dispositif.

On connaît des remorques notamment des remorques à bateaux qui comprennent un châssis comportant des longerons et des traverses pour former une structure rigide.

Sur ces longerons et traverses sont disposés des éléments support, généralement des chandelles avec des patins et/ou des ensembles à rouleaux.

En ce qui concerne les remorques à bateaux, il est prévu un treuil à l'avant qui assure à l'aide d'un câble la remontée du bateau.

Les remorques pour la mise à l'eau ou pour la sortie de l'eau sont généralement reculées sur une cale de mise à l'eau au moyen d'un véhicule tracteur. La remorque est partiellement introduite dans l'eau.

Les problèmes se posent généralement à la remontée du bateau sur la remorque.

En effet, il faut disposer le bateau dans l'alignement des rouleaux pour permettre un bon roulage et pour éviter de dégrader la coque sur les supports métalliques.

Or, les mouvements de l'eau, les vents, les courants rendent cette opération difficile.

De ce fait, il a été mis au point un rail multi rouleaux à l'arrière de la remorque qui bascule pour recevoir l'étrave du bateau et assurer un guidage avant même que ledit bateau ne soit monté sur la remorque.

Au fur et à mesure de la traction avec le treuil, l'étrave roule sur ce premier rail et la coque prend contact avec les autres rouleaux supports répartis sur toute la longueur de la remorque.

Dès lors, on comprend que l'agencement des rouleaux doit être parfaitement adapté à la coque tant durant la montée ou la descente du bateau de la remorque qu'une fois en place sur la remorque.

En effet, il faut pouvoir répartir le poids de l'embarcation sur l'ensemble de la structure et de préférence sur les différents rouleaux solidaires des différentes traverses et des longerons.

La plus grande difficulté est de pouvoir positionner ce rail et les supports latéraux solidaires de la même traverse de façon adéquate quel que soit le modèle de bateau.

L'invention propose une solution à ce problème.

Le dispositif qui en résulte est maintenant décrit à partir d'un mode de réalisation particulier, non limitatif, ce dispositif faisant l'objet de dessins annexés sur lesquels les différentes figures représentent :
- figures 1A, 1B et 1C, des vues en perspective du dispositif dans ses différentes positions,
- figure 2, une vue en coupe transversale de ce dispositif, et
- figures 3A et 3B des vues du noyau.

Une remorque de bateau comprend de façon générale des longerons 10 dont une partie est représentée et des traverses fixes, seule la traverse 12 arrière étant représentée sur les figures.

Au moins un essieu, non représenté permet le roulage sur route.

La traverse arrière porte avantageusement au moins une rampe centrale, basculante, munie de rouleaux multiples. Ces rouleaux sont portés par un berceau formant transversalement un Vé avec un angle fixe.

Avantageusement, de part et d'autre de cette rampe, il est aussi prévu des supports latéraux à rouleaux, solidaires de cette même traverse 12 arrière par des chandelles. Ces supports latéraux comprennent chacun un berceau inclinable latéralement.

Le but de la présente invention est de permettre à cette traverse arrière de disposer de deux degrés de liberté :
- le premier degré correspondant à une rotation suivant la flèche R autour d'un axe horizontal transversal, parallèle au plan de la remorque.
- le second suivant un axe vertical Z.

En fonction de la configuration de la coque du bateau, il peut en effet être nécessaire de positionner la traverse sensiblement au niveau ou plus basse que le plan général de la remorque. Le plan général de la remorque dépend de la hauteur de roues, de l'essieu et ne peut être réduit aisément.

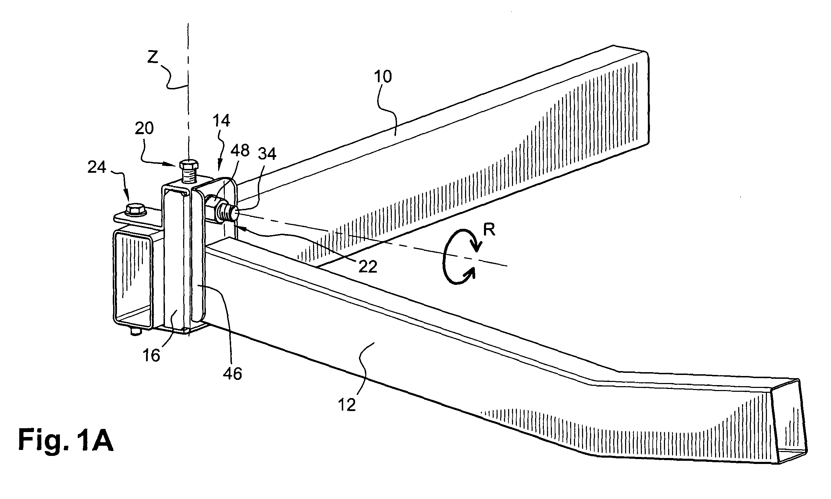

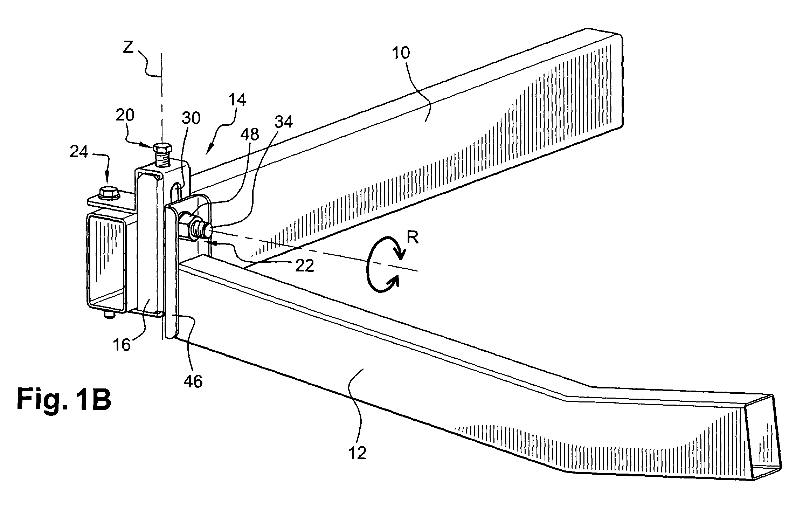

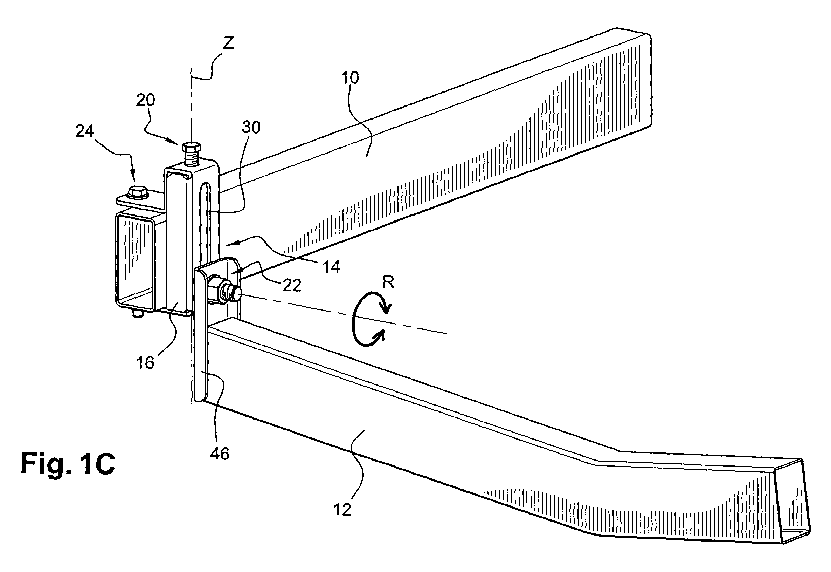

Ainsi la traverse arrière peut prendre deux positions extrêmes haute et basse mais aussi toute position intermédiaire, comme montré sur les figures 1A, 1B et 1C.

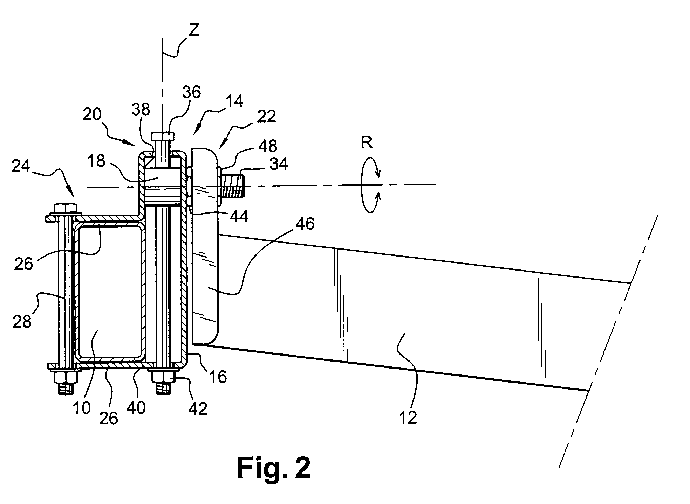

Le dispositif selon l'invention est notamment représenté sur la figure 2

Ce dispositif comprend des moyens 14 de fixation de la traverse arrière libres en rotation et réglables en hauteur par rapport aux longerons qui les supportent. Ces moyens 14 comprennent un corps 16 creux de forme parallélépipédique dans le cas présent, dont l'axe longitudinal est orienté perpendiculairement au plan général de la remorque, suivant l'axe des Z. Ce corps 16 comprend un noyau 18 mobile logé dans ce corps 16, des moyens 20 de manoeuvre de ce noyau mobile dans le corps 16 suivant l'axe Z et des moyens 22 de solidarisation de la traverse 12 arrière à ce noyau 18.

Le corps creux est muni de moyens 24 de solidarisation aux longerons 10 sous forme de pattes 26 formant une chape et d'une vis 28 reliant ces pattes.

Le corps 16 parallélépipédique est muni d'un lumière 30 longitudinale, crénelée de façon préférentielle.

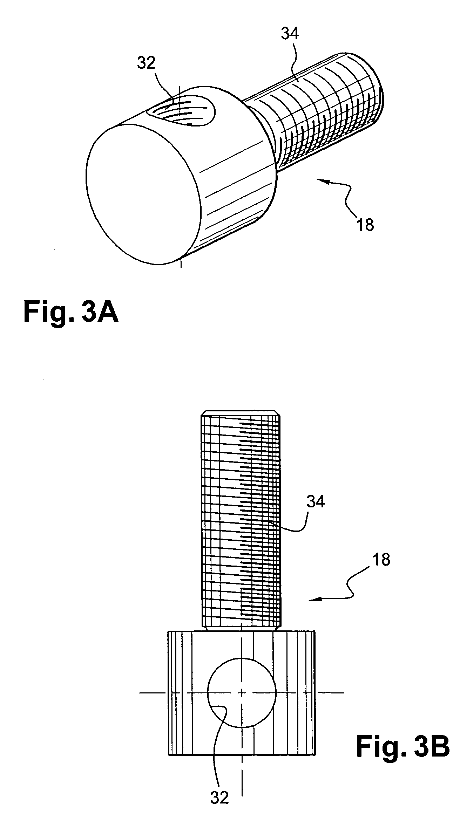

Le noyau 18 est représenté en détail sur les figures 3A et 3B. De façon préférentielle, ce noyau est de forme cylindrique et percé suivant son axe de révolution d'un alésage 32, taraudé.

Ce noyau porte aussi un ergot 34, orienté de façon radiale et filetée sur sa partie utile.

Les moyens 20 de manoeuvre sont composés d'une vis 36 dont la tête fait saillie sur le dessus du corps 16, à travers un trou 38 ménagé dans la face supérieure de ce corps.

L'extrémité de cette vis 36 visse dans l'alésage 32 taraudé du noyau et se prolonge à travers un trou 40 ménagé dans la face inférieure du corps 16.

Un écrou 42, avec des moyens anti-desserrage intégrés tels qu'une bague en matériau plastique, assure une immobilisation de la vis suivant son axe, en la laissant libre en rotation. Deux rondelles non représentées pour la clarté du dessin et non nécessaires peuvent néanmoins améliorer la rotation.

Ainsi que montré sur la figure 2, l'ergot 34 fait saillie à travers la lumière 30. Un écrou 44 plat est vissé sur la partie fileté jusqu'a venir au contact de la face extérieure portant la lumière.

Cet écrou plat assure un bon guidage de l'ergot et assure le rôle d'entretoise pour recevoir une cornière 46 en l'occurrence sur laquelle est rapportée l'une des extrémités de la traverse 12 arrière, dans le mode de réalisation présenté, la fixation étant effectuée par soudage.

Un écrou 48 de fixation est monté à l'extrémité de l'ergot 34 fileté, cet écrou comprend des moyens anti-desserrage intégrés tels qu'une bague en matériau plastique afin de laisser libre en rotation la cornière 46.

Le montage tel que décrit est mis en oeuvre de la façon suivante.

Le corps 16 est monté sur le longeron correspondant au moyen des pattes 26 et de la vis 28. Ce montage est ajusté pour éviter tout mouvement intempestif même si les efforts de serrage sont limités, ce qui est obtenu car l'ensemble entoure parfaitement le longeron.

Le noyau est en place dans le corps 16 et l'écrou plat 44 assure un guidage adapté de l'ergot dans la lumière.

La cornière 46 est rapportée sur l'ergot et l'écrou 48 assure son maintien tout en laissant libre en rotation cette cornière et la traverse 12 arrière qui en est solidaire, suivant la flèche R.

En fonction des besoins, l'opérateur agit sur les moyens 20 de manoeuvre et plus particulièrement sur la vis 36 dont la tête fait saillie sur le dessus du corps 16. lorsque l'opérateur visse, il assure la montée du noyau et inversement.

La vis est en effet immobilisée en translation par l'écrou 42.

La traverse 12 arrière peut ainsi être amenée au niveau du plan de la remorque ou positionnée au-dessous des longerons, sans perdre les avantages acquis par la traverse montée libre en rotation.

En effet, par cette position, on dispose d'une rampe plus basse ainsi que les supports latéraux qui s'orientent également, simultanément à la traverse.

Ainsi, lorsque l'opérateur souhaite remonter son bateau, le bateau se trouve guidé par la rampe en position centrale et abaissée mais aussi latéralement par les supports latéraux si bien qu'il ne risque pas de passer à côté de la rampe lorsque la traction est exercée avec le treuil, au moment d'aborder ladite rampe.

On note aussi que, une fois le bateau monté intégralement sur la remorque, l'arrière peut être en position basse bien que le plan de la remorque soit conservé au même niveau.

On remarque simultanément que le dispositif selon l'invention peut aisément être mis en place sur les remorques existantes et conçues avec une traverse arrière montée libre en rotation. En effet, pour obtenir cet effet basculant de la traverse dans son intégralité, il était déjà prévu des pattes rapportées sur les longerons mais avec un axe fixe de rotation.

Il convient donc de remplacer les pattes existantes par le dispositif selon la présente invention.

Avantageusement, pour disposer d'un produit industriel et adapté pour fonctionner quelle que soient les conditions, eau douce, eau de mer, les pièces du corps sont réalisées en tôle épaisse pliée, l'ensemble étant galvanisé. Les pièces mobiles noyau/ergot/vis de manoeuvre sont réalisées en un matériau résistant à la corrosion tel que de l'inox, du laiton ou de l'acier zingué.

On remarque aussi que le noyau est de forme cylindrique si bien qu'il ne rentre en contact avec les parois intérieures du corps que par une génératrice, en cas de déformations, ce qui ne peut perturber le fonctionnement par coincement, même en cas de présence de sable ou autres déchets ayant pénétré dans le corps.

Avantageusement les bords de la lumière sont crénelés de façon à faciliter le repérage et à permettre un réglage symétrique.

## Revendications

1. Dispositif de réglage d'une traverse (12) d'une remorque à bateaux comprenant des longerons (10) et des traverses fixes, **caractérisé en ce qu'**il comprend des moyens (14) de fixation de ladite traverse (12), libres en rotation et réglables en hauteur par rapport aux longerons qui les supportent.

2. Dispositif de réglage d'une traverse (12) d'une remorque à bateaux selon la revendication 1, **caractérisé en ce que** ces moyens (14) de fixation comprennent un corps (16) creux dont l'axe longitudinal est orienté perpendiculairement au plan général de la remorque, suivant l'axe des Z, un noyau (18) mobile logé dans ce corps (16), des moyens (20) de manoeuvre de ce noyau mobile dans le corps (16) suivant l'axe Z et des moyens (22) de solidarisation de la traverse (12) à ce noyau (18).

3. Dispositif de réglage d'une traverse (12) d'une remorque à bateaux selon la revendication 2, **caractérisé en ce que** le corps (16) creux est muni de moyens (24) de solidarisation aux longerons (10) comportant des pattes (26) formant une chape et une vis (28) reliant ces pattes.

4. Dispositif de réglage d'une traverse (12) d'une remorque à bateaux selon la revendication 2 ou 3, **caractérisé en ce que** le noyau (18) comprend un alésage (32), taraudé et porte un ergot (34), orienté de façon radiale par rapport à l'alésage et filetée sur sa partie utile.

5. Dispositif de réglage d'une traverse (12) d'une remorque à bateaux selon les revendications 2 et 4, **caractérisé en ce que** les moyens (20) de manoeuvre sont composés d'une vis (36) dont la tête fait saillie sur le dessus du corps (16), l'extrémité de cette vis (36) visse dans l'alésage (32) taraudé du noyau (18) et se prolonge à travers un trou (40) ménagé dans la face inférieure du corps (16).

6. Dispositif de réglage d'une traverse (12) d'une remorque à bateaux selon la revendication 5, **caractérisé en ce que** l'extrémité de la vis (36) porte un écrou (42) avec des moyens anti-desserrage intégrés.

7. Dispositif de réglage d'une traverse (12) d'une remorque à bateaux selon l'une quelconque des revendications 2 à 6, **caractérisé en ce que** le corps (16) parallélépipédique est muni d'un lumière (30) longitudinale.

8. Dispositif de réglage d'une traverse (12) d'une remorque à bateaux selon l'une quelconque des revendications 4 à 7, **caractérisé en ce qu'**il comprend un écrou (44) plat vissé sur la partie filetée de l'ergot faisant saillie à travers la lumière (30), venant au contact de la face extérieure portant la lumière (30) longitudinale.

9. Remorque à bateaux comprenant une traverse (12) arrière liée aux longerons par le dispositif selon l'une quelconque des revendications précédentes.

10. Remorque à bateaux selon la revendication 9, **caractérisé en ce que** la traverse (12) arrière porte au moins une rampe centrale, basculante, munie de rouleaux multiples, ces rouleaux étant portés par un berceau formant transversalement un Vé avec un angle fixe ainsi que des supports latéraux à rouleaux, solidaires de cette même traverse (12) arrière par des chandelles, ces supports latéraux comprenant chacun un berceau inclinable latéralement.
